# EUROPEAN PATENT SPECIFICATION

(11) **EP 3 537 015 B1**
(45) Date of publication and mention of the grant of the patent: **14.07.2021**
(21) Application number: 16920658.8
(22) Date of filing: 27.12.2016
(51) Int. Cl.: F16K 11/074, F16K 31/385, F16K 31/524

(54) **SWITCHING VALVE CORE FOR WATER SHUTOFF**
SCHALTVENTILKERN FÜR WASSERABSPERRUNG
PIÈCE INTÉRIEURE DE VALVE DE COMMUTATION POUR L'ARRÊT D'EAU

(30) Priority: 07.11.2016 CN 201610976460; 07.11.2016 CN 201621199820 U
(43) Date of publication of application: 11.09.2019
(73) Proprietor: Xiamen Solex High-Tech Industries Co., Ltd., Xiamen, Fujian 361000 (CN)
(72) Inventor: WEI, Zhijian, Xiamen Fujian 361000 (CN); LIN, Fangqi, Xiamen Fujian 361000 (CN); LIN, Wenyuan, Xiamen Fujian 361000 (CN); TAN, Weiliang, Xiamen Fujian 361000 (CN)
(74) Representative: Lang, Christian
(86) International application number: PCT/CN2016/112350
(87) International publication number: WO 2018/082171

(56) References cited:
- WO-A1-2009/119731
- CN-A- 101 218 458
- CN-A- 103 486 295
- CN-A- 105 805 363
- JP-A- 2001 078 911
- US-A1- 2015 115 183

## Description

### Technical field

The invention relates to a water outlet device, in particular to a water outlet valve core.

### Background technology

In recent years, hand-held shower nozzles have appeared on the market, which can switch between multiple water outlet modes. In such a hand-held shower head, the waterway is changed by operating a valve core built in the shower nozzle body to change the water discharge mode.

Therefore, the traditional valve core only has the function of changing waterway, and the realization of water-shutoff function needs the help of other components and structures. It makes the whole structure more complex and the operation is not convenient enough.

For example, document JP2001078911A relates to the technological background and discloses a water discharge device, and in particular, a shower head having a shower water discharge opening and a flow-straightening water discharge opening, and having also a selector valve including a main valve for selecting either the discharge of shower water or the discharge of straightened flow of water. Document US2015/115183A1 relates to a conventional switching valve core as defined in the preamble of claim 1. Document CN101218458A further shows a pilot-type water discharging/ stopping and flow regulating valve device capable of performing both of discharging/stopping of water and regulation of flow, wherein, once the flow is regulated, the water can be discharged at a pre-regulated specified flow in the next water discharge operation even if the water flow is stopped.

### Summary of the invention

The main technical problem to be solved by the invention is to provide a switching valve core for water shutoff, which can realize two functions of switching and water shutoff, and has no influence on each other, when the water shutoff is being switched to the water discharging, the water discharging state is the same as the water discharging state before the water shutoff.

The secondary technical problem to be solved by the invention is to provide a switching valve core for water shutoff, which overcomes the situation that the valve core cannot be closed when water shutoff and cannot be opened at low water pressure.

In order to solve the technical problems mentioned above, the invention provides a switching valve core for water shutoff according to claim 1, which comprises a valve core body, the valve core body being provided with water inlet and a water outlet; the water inlet and the water outlet being connected to form a flow channel; the valve core body being provided with an accommodating cavity along the axial direction of the valve core body; the interior of the accommodating cavity being provided with an operating member, a water shutoff member and a water output switching member;
the operating member comprising a pressing water shutoff member and a rotatable switching member that are provided independently from each other; the pressing water shutoff member moving along the axial direction of the accommodating cavity, and the tail end of the pressing water shutoff member abutting against or being separated from a pressure relief hole of the water shutoff member;
the water shutoff member being provided with a water shutoff cavity, in which a fixing seat is placed; a sealing sheet being disposed on the fixing seat, and a water sealing portion facing the sealing sheet is disposed in the flow channel; the fixing seat and the sealing sheet being provided with a through hole communicating with the water inlet and the water shutoff cavity at corresponding positions; the fixing seat being further provided with a pressure relief hole connecting the water outlet and the water shutoff cavity;
wherein, when the end of the pressing water shutoff member is sealed against the pressure relief hole, the water in the water shutoff cavity presses down the sealing sheet along the axial direction to seal the water sealing portion; and wherein, when the end of the pressing water shutoff member is separated from the pressure relief hole, the water under the sealing sheet pushes the sealing sheet upward along the axis to be separated from the water sealing portion; and
the rotatable switching member and the water output switching member being provided in a linkage manner.

The water output switching device comprises a movable ceramic sheet and a fixed ceramic sheet mounted on the water outlet; the movable ceramic sheet being arranged in conjunction with the rotatable switching member.

The pressing water shutoff member and the fixing seat are provided with lifting portions abutting each other; wherein, in the process of the pressing water shutoff member moving upward along the axis, the lifting portions abutt against each other, so that the pressing water shutoff member drives the fixing seat to move upward.

The pressing water shutoff member comprises a ballpoint pen pressing mechanism and a pressing rod connected with it, the end of the pressing rod being connected with a guiding cylinder; the guiding cylinder being provided with a drainage cavity connected with a water shutoff cavity, wherein one end of the guiding cylinder is sleeved at the end of pressing rod and the other end is sleeved outside a pole; the end of the pole being exposed outside the pressing rod and connected with a sealing sleeve. The lifting portion comprises a first abutting block disposed on an outer circumference of the guiding cylinder and a second abutting block disposed on the fixing seat; wherein, when the sealing sleeve seals the pressure relief hole of the fixing seat, the second abutting block is located above the first abutting block and located in the same vertical plane.

In a preferred embodiment, the water inlet is provided at the side of the valve core body and the water outlet is provided at the bottom of the valve core body; the water shutoff cavity being located above the water inlet, and the fixing seat being placed at the bottom of the water shutoff cavity.

In a preferred embodiment, a compensating spring is provided in the drainage cavity.

In a preferred embodiment, the water shutoff member is a pressure cover and a fixing cover and the bottom of the pressure cover are fixedly connected and surrounded to form the water shutoff cavity; the pressure cover being also provided with a guiding cavity, which is provided above the water shutoff cavity and connected with it; the guiding cylinder moving up and down along the guiding cavity; the top of the guiding cavity being provided with a limiting block that restricts the movement of the guiding cylinder.

Further, in one example being not part of the claimed scope, the water outlet and the water inlet are respectively provided on the side of the valve core body and the water outlet is located above the water inlet.

In another example being not part of the claimed scope, the pressing water shutoff member comprises a ballpoint pen pressing mechanism and a moving rod connected with it, wherein a sealing ring is provided at the end of the moving rod;
wherein the water shutoff cavity is provided below the water inlet and the fixing seat is provided at the top of the water shutoff cavity; the moving rod passing through the fixing seat and extending to the water shutoff cavity; wherein, when the pressing water shutoff member is at a low position, the moving rod moves downward along the axis to separate the sealing ring at the end of the pressing water shutoff member from the pressure relief hole; wherein, when the pressing water shutoff member is at a high position, the moving rod moves upward along the axis so that the sealing ring at the end of the pressing water shutoff member is abutted and sealed against the pressure relief hole.

In another example being not part of the claimed scope, the outer circumference of the moving rod and the fixing seat are also provided with pushing portions for abutting; wherein, in the process of the pressing water shutoff member moving downward along the axis, the pushing portions abutting each other, so that the pressing water shutoff member drives the fixing seat to move downward.

In a preferred embodiment, the movable ceramic sheet is provided with a water outlet, and the fixed ceramic sheet is provided with at least two water outlets; the water outlet of the movable ceramic sheet is connected with different water outlets on the fixed ceramic sheet by rotating the rotatable switching member, and different water outlets are selected for discharging water.

In a preferred embodiment, the movable ceramic sheet and the fixed ceramic sheet are provided with one water outlet respectively; wherein, by rotating the rotatable switching member, the water discharge area of the moving ceramic sheet and the water hole of the fixed ceramic sheet are changed, and the amount of water discharged from the water outlet is changed.

Compared with the existing technology, the invention has the following beneficial effects:
1. The switching valve core for water shutoff provided by the invention is provided with a pressing water shutoff member and a rotatable switching member. The user realizes the state switching between water shutoff and water discharging by pressing. The waterway or flow rate of discharging water can be adjusted by rotation. The two functions do not affect each other, so when the user switches freely between discharging, water shutoff and discharging, the discharging water state can be maintained unchanged. The user does not need to adjust the discharging water state once more in each discharging, so it is convenient to use.
2. The invention provides a switching valve core for water shutoff, which is provided with a compensating spring for applying a downward force to the pole and the sealing sleeve, so that the sealing sleeve can maintain abutting against the pressure relief hole when the water is stopped. In turn, the valve core is kept stable in the water shutoff state.
3. The invention provides a switching valve core for water shutoff, which is provided with lifting portions, so that the guiding cylinder moves up and moves the fixing seat at the same time, so as to ensure that the fixing seat can drive the sealing sheet to be separated from the water sealing portion when the water is needed. It avoids the situation that the fixing seat cannot be moved up only by water pressure when the water pressure is low, that is, it cannot be opened when the pressure is low.

### Drawings

Fig. 1 is a three-dimensional decomposition diagram of the valve core in the preferred embodiment 1 of the present invention;
Fig. 2 is a cross-sectional view of the valve core in the preferred embodiment 1 of the present invention;
Fig. 3 is a cross-sectional view of the valve core in a water shutoff state in preferred embodiment 1 of the present invention;
Fig. 4 is a cross-sectional view of the valve core in a water discharging state 1 in preferred embodiment 1 of the present invention;
Fig. 5 is a cross-sectional view of the valve core in a water discharging state 2 in preferred embodiment 1 of the present invention;
Fig. 6 is a cross-sectional view of the valve core in a water discharging state in preferred embodiment 2 of the present invention;
Fig. 7 shows the position relationship between the fixed ceramic sheet and the movable ceramic sheet at the time of large flow rate of discharging water in embodiment 2 of the present invention;
Fig. 8 shows the position relationship between the fixed ceramic sheet and the movable ceramic sheet at the time of small and medium flow rate of discharging water in embodiment 2 of the present invention;
Fig. 9 is a cross-sectional view of the valve core in the example 3, which does not form part of the present invention;
Fig. 10 is a cross-sectional view of the valve core in a water shutoff state in the example 3;
Fig. 11 is a cross-sectional view of the valve core in a water discharging state 1 in the example 3;
Fig. 12 is a cross-sectional view of the valve core in a water discharging state 2 in the example 3.

### Detailed description

The present invention is further described below by means of drawings and specific embodiments.

### Embodiment 1

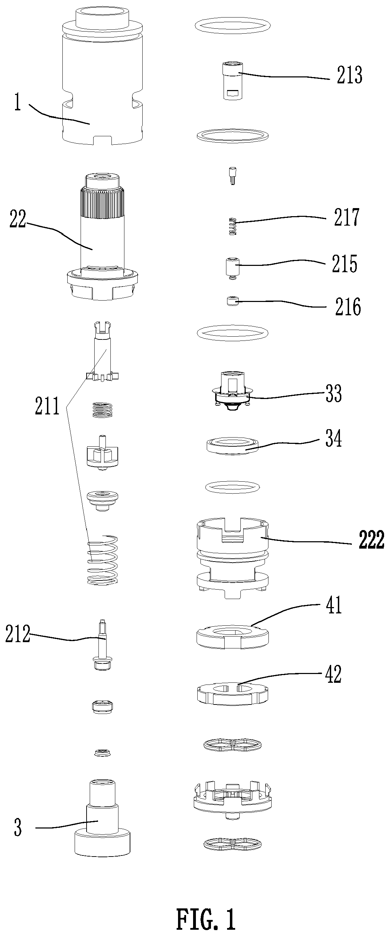

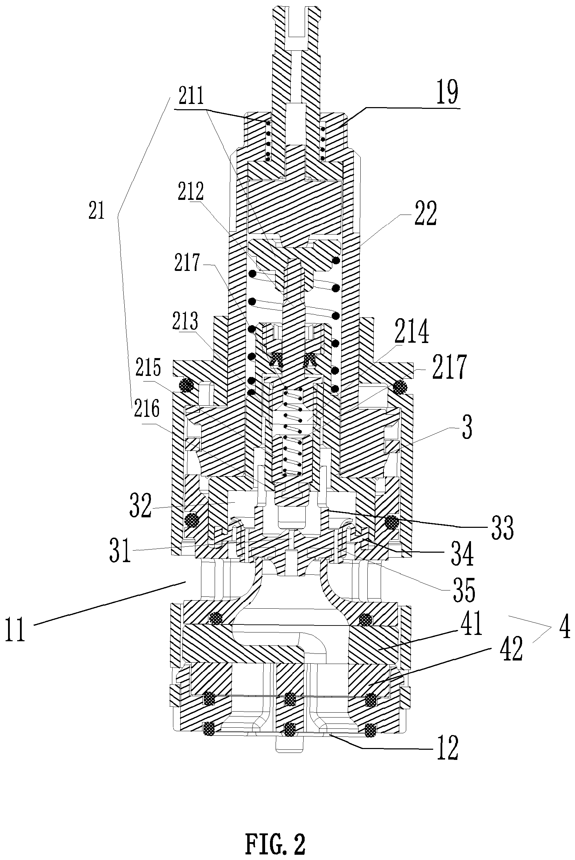

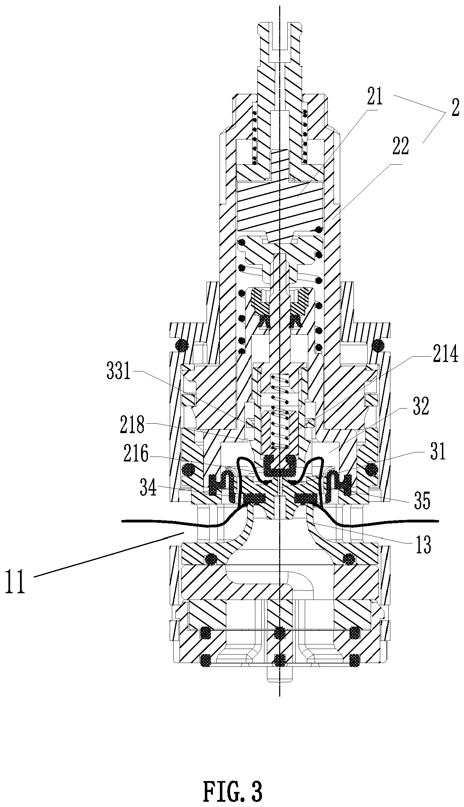

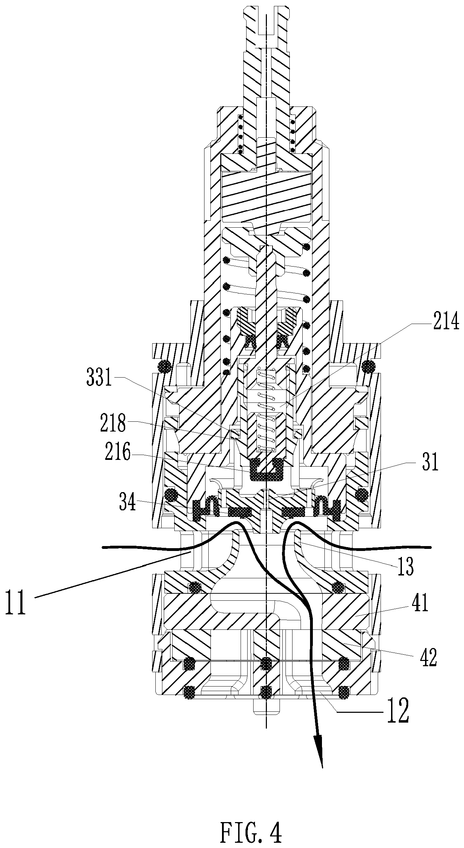

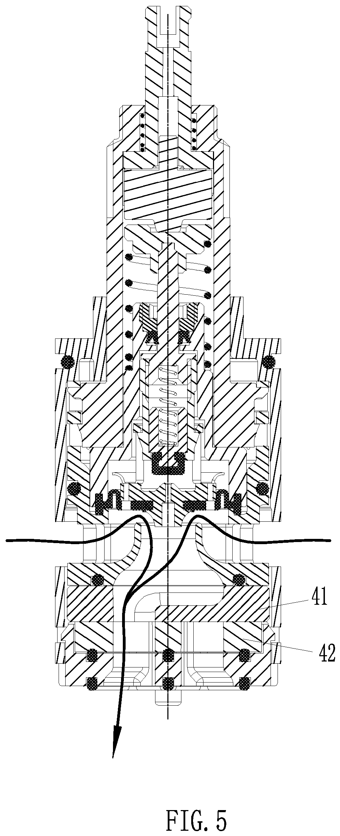

Referring to fig. 1-5, a switching valve core for water shutoff according to the present invention comprises valve core body 1 with a water inlet 11 on the side and a water outlet 12 on the bottom. The water inlet 11 and the water outlet 12 are connected to form a flow channel. The valve core body is provided with an accommodating cavity along its axial direction and the interior of the accommodating cavity is provided with an operating member 2, a water shutoff member 3 and a water output switching member 4.

The operating member 2 comprises a pressing water shutoff member 21 and a rotatable switching member 22 that are provided independently from each other. The pressing water shutoff member 21 moves along the axial direction of the accommodating cavity and the tail end of the pressing water shutoff member abuts against or is separated from a pressure relief hole 31 of the water shutoff member 3.

The water shutoff member 3 is a pressure cover, which is provided with a water shutoff cavity 32. A fixing seat 33 is placed at the bottom of the water shutoff cavity 32, which is fixedly connected with the bottom of the water shutoff cavity 32 and surrounds the water shutoff cavity 32 together. A sealing sheet 34 is arranged on the fixing seat 33, and a water sealing portion 13 which is approaching the sealing sheet 34 in the flow channel. The fixing seat 33 and the sealing sheet 34 are provided with a through hole 35 communicating with the water inlet 11 and the water shutoff cavity 32 at corresponding positions. The fixing seat 33 is also provided with a pressure relief hole 31 which communicates the water outlet 32 and the water shutoff cavity 32.

Therefore, when the pressing water shutoff member 21 is abutted against the pressure relief hole 31, the water flows from the water inlet 11 to the water shutoff cavity 32 through the through hole 35; at this time, because the pressure relief hole 31 is sealed, the water pressure above the sealing sheet 34 is greater than the water pressure below. The sealing sheet 34 moves downward under the action of water pressure and abuts against the water sealing portion 13., so that the water cannot flow through the water outlet 12 of the flow channel and water shutoff is realized.

When the pressing water shutoff member 21 is separated from the pressure relief hole 31, the water in the water shutoff cavity 32 flows from the pressure relief hole 31 to the flow channel. The water pressure in the flow channel is higher than that in the water shutoff cavity 32. Under the action of water pressure, the sealing sheet 34 moves up and is separated from the water sealing portion 13. The water enters the flow channel through the water inlet 11 and flows out from the water outlet 12, so that water discharging is realized.

The water output switching member 4 comprises a movable ceramic sheet 41 and a fixed ceramic sheet 42 mounted on the water outlet 12.The movable ceramic sheet 42 is disposed in conjunction with the rotatable switching member 22 through the connecting sleeve 222. The movable ceramic sheet 41 is provided with a water outlet and the fixed ceramic sheet 42 is provided with at least two water outlets. The water outlet of the movable ceramic sheet 41 can be connected with different water outlets on the fixed ceramic sheet 42 by rotating the rotatable switching member 22 and different water outlets are selected for discharging water. The number of water outlets on the fixed ceramic sheet 42 can also be set to three or more.

The upper end of the connecting sleeve 222 is engaged with the rotatable switching member 22, the lower end thereof being engaged with the movable ceramic sheet 42, and the middle portion is provided with a hole adapted to the water inlet hole.

As can be seen from the above, the pressing water shutoff member 21 and the rotatable switching member 22 are two completely independent components, and they do not interfere with each other. Therefore, the relative position of the fixed ceramic sheet 42 and the movable ceramic sheet 41 will not change when the user switches from the discharging state to the water shutoff state. When the user switches to the discharging state again, the water discharge state can still be maintained as the last discharging state without repeated adjustment by the user, which greatly facilitates the user's use and enhances the use experience.

The technical scheme of this embodiment: the pressing water shutoff member 21 and the rotatable switching member 22 are coaxially arranged in the body and the pressing water shutoff member 21 is located in rotatable switching member 22. The two groups of mechanisms are completely independent components and do not interfere with each other, the structure of the present invention is more compact due to the coaxial arrangement of the two.

It can be seen from the above description that when the water shutoff is switched to the water discharging, the water pressure is applied to the fixing seat 33 to drive the fixing seat 33 and the sealing sheet 34 to move upward. If the water pressure is relatively low, there will be a situation that the water pressure is not enough to drive the fixing seat 33 to move upward, and it will not be able to relieve the abutting state of the sealing sheet 34 and the water sealing portion 13, forming a "low pressure cannot be opened" situation, and the stability is not good enough.

In order to solve this problem, the pressing water shutoff member 21 and the fixing seat 33 are provided with lifting portions abutting each other; in the process of the pressing water shutoff member 21 moving upward along the axis, the lifting portions abut against each other, so that the pressing water shutoff member 21 drives the fixing seat to move upward. This ensures that the fixing seat 33 can be moved up in time under high or low pressure to ensure the reliability of the water discharging state.

In order to realize the upward and downward movement of the pressing water shutoff member 21, the pressing water shutoff member 21 includes a ballpoint pen pressing mechanism 211 and a pressing rod 212 linked with it. The end of the pressing rod 212 is connected with a guiding cylinder 213.The guiding cylinder 213 is provided with a drainage cavity 214 connected with a water shutoff cavity 32. One end of the guiding cylinder 214 is sleeved at the end of pressing rod 212.
The other end is sleeved outside the pole 215.The end of the pole 215 is exposed outside pressing rod 212 and connected with a sealing sleeve 216.

By repeatedly pressing the ballpoint pen pressing mechanism 211, the user can make the pressing water shutoff member 21 move up and down. This part of the structure belongs to the existing technology and will not be repeated. The purpose of the drainage cavity 214 is to balance most of the water pressure in the water shutoff cavity 32 by filling the drainage cavity 214 with water in the water shutoff state. In this way, the pressing rod 212 and the sealing sleeve 216 are subjected to relatively small water pressure, and the force required to switch from water shutoff to water discharging is relatively small.

On the other hand, under the condition of water shutoff, because the flexible sealing sheet 34 will be compressed when it is sealed with the water sealing portion 13, the fixing seat 33 and the sealing sheet will sink to a certain extent. At this time, the sealing sleeve 216 may be separated from the pressure relief hole 31, resulting in the condition that the valve core cannot be closed when water shutoff. In order to solve this problem, the drainage cavity 214 is provided with a compensating spring 217 with compression to exert a downward force on the pole 215 and the sealing sleeve 216 at any time, so that the sealing sleeve can keep abutting against the pressure relief hole 31 while water shutoff, thereby maintaining the valve core stable in the water shutoff state.

The lifting portion comprises a first abutting block 218 arranged around the guiding cylinder 213 and a second abutting block 331 arranged on the fixing seat 33. When the pressure relief hole 31 of the fixing seat 33 is sealed by the sealing sleeve 216, the second abutting block 331 is located above the first abutting block 218 and in the same vertical plane.

### Embodiment 2

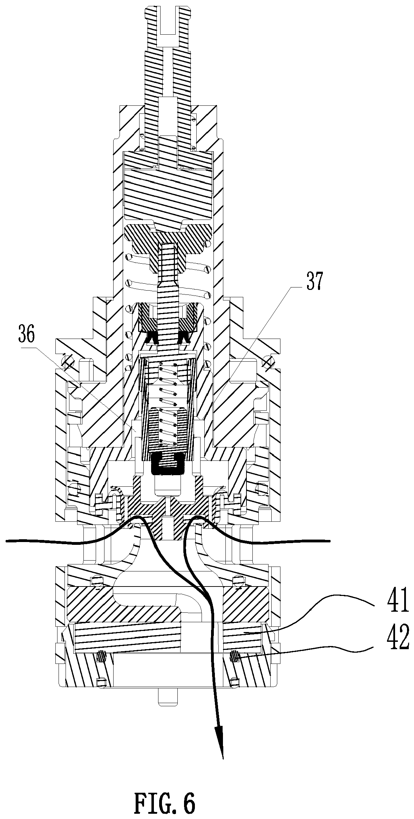

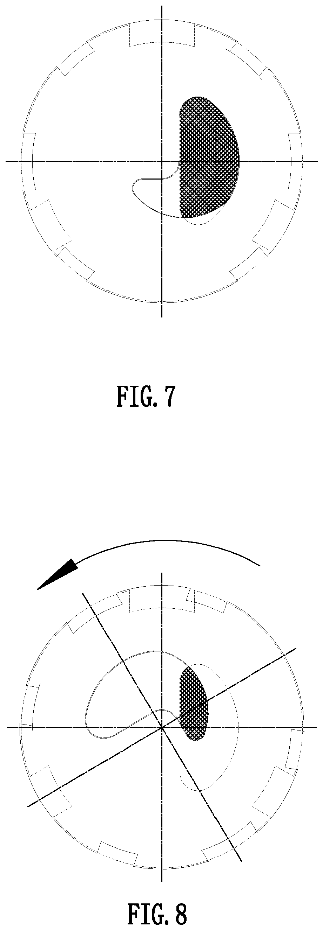

Referring to Fig. 6-8, the difference between the embodiment 2 and the embodiment 1 is that the movable ceramic sheet 41 and the fixed ceramic sheet 42 are provided with one water outlet respectively; wherein, by rotating the rotatable switching member 22, the water discharge area in which the water outlet of the movable ceramic sheet 41 and the fixed ceramic sheet 42 coincide with each other is changed, and the amount of water discharged from the water outlet 12 is changed. The rest is the same as embodiment 1 and will not be repeated.

### Example 3

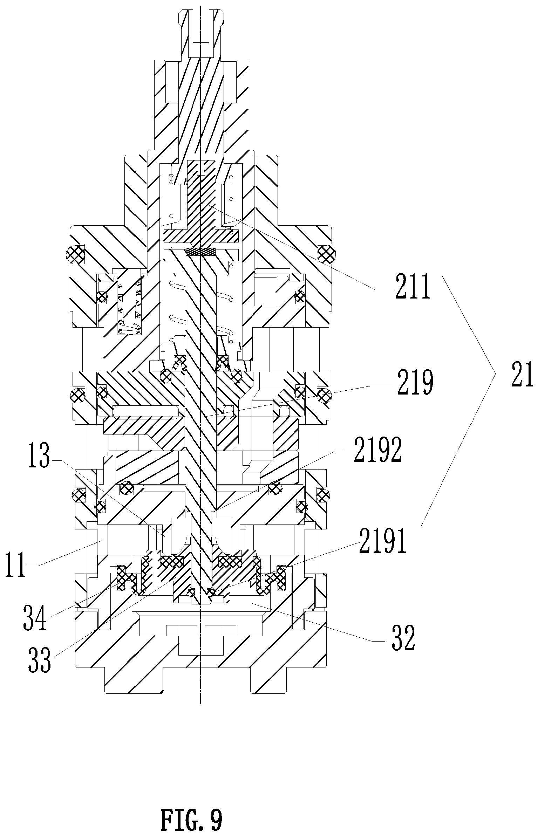

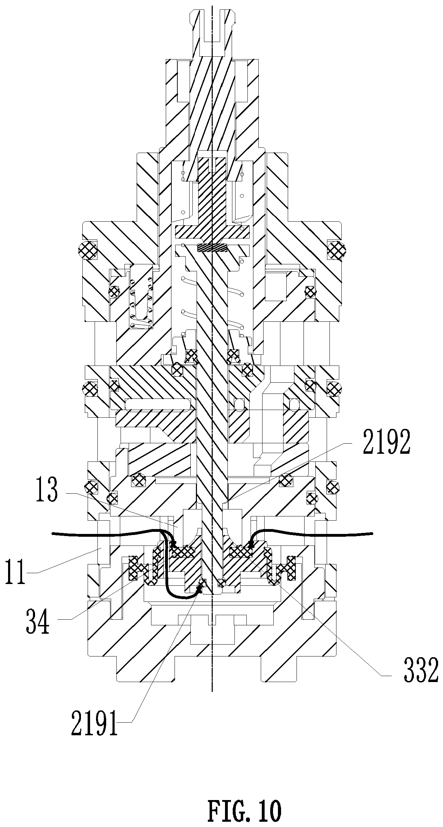

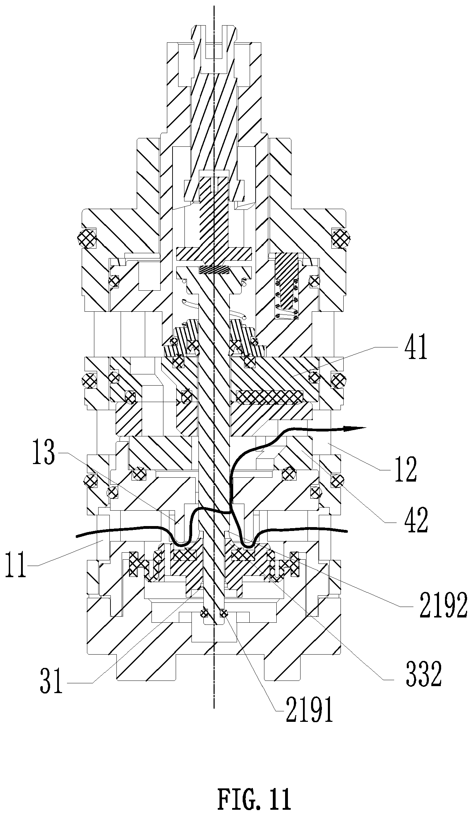

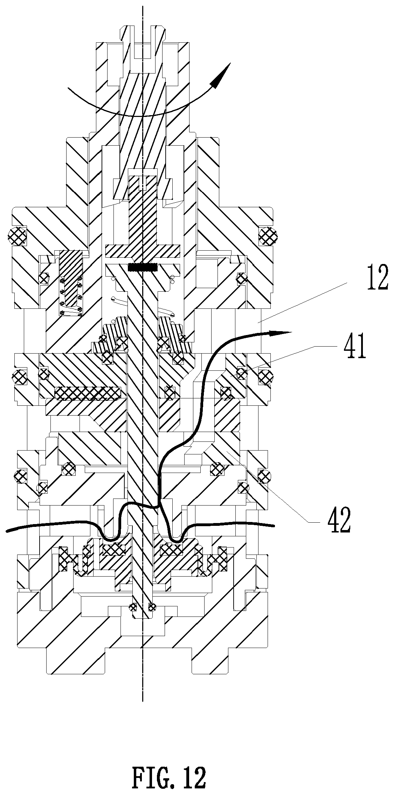

Referring to figs. 9-12, in this example not falling within the claimed scope, the water outlet 12 and the water inlet 11 are respectively arranged on the side of the valve core body 1, and the water outlet 12 is located above the water inlet 11. The pressing water shutoff member 21 includes a ballpoint pen pressing mechanism 211 and a moving rod 219 connected with it. A sealing ring 2191 is arranged at the end of the moving rod 219.

The water shutoff cavity 32 is arranged below the inlet 11, and the fixing seat 33 is arranged at the top of the water shutoff cavity 32. The moving rod 219 passes through the fixing seat 33 and extends to the water shutoff cavity 32.When the pressing water shutoff member 21 is at a low position, the moving rod 219 moves downward along the axis to separate the sealing ring 2191 at the end from the pressure relief hole 31.When the pressing water shutoff member 21 is at a high position, the moving rod 219 moves upward along the axis so that the sealing ring 2191 at the end of the pressing water shutoff member is sealed against the pressure relief hole 31.Therefore, the state of water shutoff and water discharging state is just opposite to that of embodiment 1.

In another example not falling within the claimed scope,, the outer circumference of the moving rod 219 and the fixing seat may be also provided with pushing portions for abutting; the pushing portion is a first pushing block 2192 extending outward in the axial direction of the outer circumference of the moving rod 219, and a second pushing block 332 on the fixing seat 33; wherein, when the moving rod 219 is located at the water shutoff position, the first pushing block 2192 is located above the second pushing block 332.When the moving rod 219 moves down from the water shutoff position to the discharging water position, the first pushing block 2192 and the second pushing block 332 are abutted and pushed. The pushing force generated will move the fixing seat 33 down from the water shutoff position to the discharging water position. Therefore, no matter the water pressure is large or small, the fixing seat 33 can be opened in time when it needs to be opened.

Otherwise the features of example 3 are the same as for embodiments 1 and 2 and will not be repeated. The only difference is that in example 3, the fixed ceramic sheet 42 is placed on the side of the moving ceramic sheet 41 near the inlet.

The above descriptions are merely examples of the use of the present technical content, and any modifications and variations made by those skilled in the art using the present invention are the scope of patents claimed herein and are not limited to those disclosed in the embodiments.

### Industrial applicability

The invention provides a switching valve core for water shutoff. By setting a pressing water shutoff member and a rotatable switching member, the user realizes the state switching between water shutoff and discharging by pressing; the waterway or flow rate of water discharging can be adjusted by rotation. The two functions do not affect each other, so when the user switches freely between discharging, water shutoff and discharging, the discharging water state can be maintained unchanged. The user does not need to adjust the discharging water state once more in each discharging, so it is convenient to use.

## Claims

1. A switching valve core for water shutoff, which comprises a valve core body (1), the valve core body (1) being provided with a water inlet (11) and a water outlet (12); the water inlet (11) and the water outlet (12) being connected to form a flow channel; the valve core body (1) being provided with an accommodating cavity along its axial direction; wherein an interior of the accommodating cavity is provided with an operating member (2), a water shutoff member (3) and a water output switching member (4);
wherein the operating member (2) comprises a pressing water shutoff member (21) and a rotatable switching member (22) that are provided independently from each other; the pressing water shutoff member (21) being movable along an axial direction of the accommodating cavity, and the tail end of the pressing water shutoff member (21) abutting against or being separated from a pressure relief hole (31) of the water shutoff member (3);
wherein the water shutoff member (3) is provided with a water shutoff cavity (32), in which a fixing seat (33) is placed; a sealing sheet (34) being disposed on the fixing seat (33), and a water sealing portion (13) facing the sealing sheet (34) being disposed in the flow channel; wherein the fixing seat (33) and the sealing sheet (34) are provided with a through hole (35) communicating with the water inlet (11) and the water shutoff cavity (32) at corresponding positions; wherein the fixing seat (33) is further provided with the pressure relief hole (31) connecting the water outlet (12) and the water shutoff cavity (32);
wherein, when the end of the pressing water shutoff member (21) is sealed against the pressure relief hole (31), the water in the water shutoff cavity (32) presses down the sealing sheet (34) along the axial direction to seal the water sealing portion (13); wherein, when the end of the pressing water shutoff member (21) is separated from the pressure relief hole (31), the water under the sealing sheet (34) pushes the sealing sheet (34) upward along the axis to be separated from the water sealing portion (13);
wherein the rotatable switching member (22) and the water output switching member (4) are provided in a linkage manner;
wherein the water output switching member (4) comprises a movable ceramic sheet (41) and a fixed ceramic sheet (42) mounted on the water outlet (12); the movable ceramic sheet (42) being arranged in conjunction with the rotatable switching member (22);
**characterized in that** the pressing water shutoff member (21) comprises a ballpoint pen pressing mechanism (211) and a pressing rod (212) connected with it, the end of the pressing rod (212) being connected with a guiding cylinder (213); the guiding cylinder (213) being provided with a drainage cavity (214) connected with the water shutoff cavity (32), one end of the guiding cylinder (214) being sleeved at the end of pressing rod (212) and its other end being sleeved outside a pole (215); the end of the pole (215) being exposed outside the pressing rod (212) and connected with a sealing sleeve (216);
the pressing water shutoff member (21) and the fixing seat (33) are provided with lifting portions abutting each other, wherein, in the process of the pressing water shutoff member (21) moving upward along the axis, the lifting portions are abutting against each other, so that the pressing water shutoff member (21) drives the fixing seat (33) to move upward; and
wherein the lifting portions comprise a first abutting block (218) disposed on an outer circumference of the guiding cylinder (213) and a second abutting block (331) disposed on the fixing seat (33), wherein, when the sealing sleeve (216) seals the pressure relief hole (31) of the fixing seat (33), the second abutting block (331) is located above the first abutting block (218) and in the same vertical plane.

2. The switching valve core for water shutoff according to claim 1, wherein the water inlet (11) is provided at the side of the valve core body (1) and the water outlet (12) is provided at the bottom of the valve core body (1); the water shutoff cavity (32) being located above the water inlet (11), and wherein the fixing seat (33) is placed at the bottom of the water shutoff cavity (32).

3. The switching valve core for water shutoff according to claim 1, wherein a compensating spring (217) is provided in the drainage cavity (214).

4. The switching valve core for water shutoff according to claim 1,wherein the water shutoff member (3) is a pressure cover, wherein a fixing cover and the bottom of the pressure cover are fixedly connected and surrounded to form the water shutoff cavity (32); the pressure cover being also provided with a guiding cavity, which is provided above the water shutoff cavity (32) and connected with it; the guiding cylinder (213) moving up and down along the guiding cavity; the top of the guiding cavity being provided with a limiting block that restricts the movement of the guiding cylinder (213).

5. The switching valve core for water shutoff according to claim 1,wherein the movable ceramic sheet (41) is provided with a water outlet and the fixed ceramic sheet (42) is provided with at least two water outlets; the water outlet of the movable ceramic sheet (41) being connectable with different water outlets on the fixed ceramic sheet (42) by rotating the rotatable switching member (4) and different water outlets are selected for discharging water.

6. The switching valve core for water shutoff according to claim 5, wherein the movable ceramic sheet (41) and the fixed ceramic sheet (42) are provided with one water outlet respectively; wherein, by rotating the rotatable switching member (22), a water discharge area, in which the respective water outlets of the movable ceramic sheet (41) and the fixed ceramic sheet (42) coincide with each other, is changed, and the amount of water discharged from the water outlet (12) is changed.

7. The switching valve core for water shutoff according to claim 1, wherein the pressing water shutoff member (21) and the rotatable switching member (22) are coaxially arranged in the body, and the pressing water shutoff member (21) being located in the rotatable switching member (22), and the two groups of mechanisms are completely independent components.

## Patentansprüche

1. Schaltventileinsatz für die Wasserabsperrung, welcher einen Ventileinsatzkörper (1) umfasst, wobei der Ventileinsatzkörper (1) mit einem Wassereinlass (11) und einem Wasserauslass (12) versehen ist, wobei der Wassereinlass (11) und der Wasserauslass (12) verbunden sind, um einen Strömungskanal zu bilden, wobei der Ventileinsatzkörper (1) entlang seiner axialen Richtung mit einem Aufnahmehohlraum versehen ist, wobei ein Innenraum des Aufnahmehohlraums mit einem Betätigungselement (2), einem Wasserabsperrelement (3) und einem Wasserausgangsschaltelement (4) versehen ist,
wobei das Betätigungselement (2) ein Druck-Wasserabsperrelement (21) und ein Dreh-Schaltelement (22) umfasst, welche unabhängig voneinander vorgesehen sind, wobei das Druck-Wasserabsperrelement (21) entlang einer axialen Richtung des Aufnahmehohlraums bewegbar ist und das hintere Ende des Druck-Wasserabsperrelements (21) an ein Druckentlastungsloch (31) des Wasserabsperrelements (3) anstößt oder davon getrennt ist,
wobei das Wasserabsperrelement (3) mit einem Wasserabsperrhohlraum (32) versehen ist, in dem ein Befestigungssitz (33) angeordnet ist, wobei eine Dichtungsplatte (34) auf dem Befestigungssitz (33) angeordnet ist und ein Wasserdichtungsabschnitt (13), welcher dem Dichtungsplatte (34) gegenüberliegt, in dem Strömungskanal angeordnet ist, wobei der Befestigungssitz (33) und die Dichtungsplatte (34) mit einem Durchgangsloch (35) versehen sind, welches mit dem Wassereinlass (11) und dem Wasserabsperrhohlraum (32) an entsprechenden Positionen in Verbindung steht, wobei der Befestigungssitz (33) ferner mit dem Druckentlastungsloch (31) versehen ist, welches den Wasserauslass (12) und den Wasserabsperrhohlraum (32) verbindet,
wobei, wenn das Ende des Druck-Wasserabsperrelements (21) gegen das Druckentlastungsloch (31) abgedichtet ist, das Wasser in dem Wasserabsperrhohlraum (32) die Dichtungsplatte (34) entlang der axialen Richtung nach unten drückt, um den Wasserabdichtungsabschnitt (13) abzudichten, wobei, wenn das Ende des Druck-Wasserabsperrelements (21) von dem Druckentlastungsloch (31) getrennt ist, das Wasser unter der Dichtungsplatte (34) die Dichtungsplatte (34) entlang der Achse nach oben drückt, um von dem Wasserabdichtungsabschnitt (13) getrennt zu werden,
wobei das Dreh-Schaltelement (22) und das Wasserausgangsschaltelement (4) in einer Kopplungsart vorgesehen sind,
wobei das Wasserausgangsschaltelement (4) eine bewegliche Keramikplatte (41) und eine feststehende Keramikplatte (42) umfasst, welche am Wasserauslass (12) angebracht sind, wobei die bewegliche Keramikplatte (41) in Verbindung mit dem Dreh-Schaltelement (22) angeordnet ist,
**dadurch gekennzeichnet, dass**
das Druck-Wasserabsperrelement (21) einen Kugelschreiber - Druckmechanismus (211) und eine damit verbundene Druckstange (212) umfasst, wobei das Ende der Druckstange (212) mit einem Führungszylinder (213) verbunden ist; wobei der Führungszylinder (213) mit einem Drainagehohlraum (214) versehen ist, welcher mit dem Wasserabsperrhohlraum (32) verbunden ist, wobei ein Ende des Führungszylinders (214) mit einer Hülse am Ende der Druckstange (212) und sein anderes Ende mit einer Hülse außerhalb einer Stange (215) versehen ist, wobei das Ende der Stange (215) außerhalb der Druckstange (212) freiliegt und mit einer Dichtungshülse (216) verbunden ist,
wobei das Druck-Wasserabsperrelement (21) und der Befestigungssitz (33) mit Hebeabschnitten versehen sind, welche aneinander anliegen, wobei die Hebeabschnitte in dem Prozess der Aufwärtsbewegung des Druck-Wasserabsperrelements (21) entlang der Achse aneinander anliegen, so dass das Druck-Wasserabsperrelement (21) den Befestigungssitz (33) antreibt, sich aufwärts zu bewegen, und
wobei die Hebeabschnitte einen ersten Anschlagblock (218), welcher an einem Außenumfang des Führungszylinders (213) angeordnet ist, sowie einen zweiten Anschlagblock (331), welcher an dem Befestigungssitz (33) angeordnet ist, umfassen, wobei, wenn die Dichtungshülse (216) das Druckentlastungsloch (31) des Befestigungssitzes (33) abdichtet, der zweite Anschlagblock (331) über dem ersten Anschlagblock (218) in der gleichen vertikalen Ebene angeordnet ist.

2. Schaltventileinsatz für die Wasserabsperrung nach Anspruch 1, bei welchem der Wassereinlass (11) an der Seite des Ventileinsatzkörpers (1) vorgesehen ist und der Wasserauslass (12) am Boden des Ventileinsatzkörpers (1) vorgesehen ist, wobei der Wasserabsperrhohlraum (32) oberhalb des Wassereinlasses (11) angeordnet ist, wobei der Befestigungssitz (33) am Boden des Wasserabsperrhohlraums (32) angeordnet ist.

3. Schaltventileinsatz für die Wasserabsperrung nach Anspruch 1, bei welchem im Abflusshohlraum (214) eine Ausgleichsfeder (217) vorgesehen ist.

4. Schaltventileinsatz für die Wasserabsperrung nach Anspruch 1, bei welchem das Wasserabsperrelement (3) eine Druckabdeckung ist, wobei eine Befestigungsabdeckung und der Boden der Druckabdeckung fest verbunden und umgeben sind, um den Wasserabsperrhohlraum (32) zu bilden, wobei die Druckabdeckung auch mit einem Führungshohlraum versehen ist, welcher oberhalb des Wasserabsperrhohlraums (32) vorgesehen und mit diesem verbunden ist, wobei sich der Führungszylinder (213) entlang des Führungshohlraums auf und ab bewegt, wobei die Oberseite des Führungshohlraums mit einem Begrenzungsblock versehen ist, welcher die Bewegung des Führungszylinders (213) einschränkt.

5. Schaltventileinsatz für die Wasserabsperrung nach Anspruch 1, bei welchem die bewegliche Keramikplatte (41) mit einem Wasserauslass versehen ist und die feststehende Keramikplatte (42) mit mindestens zwei Wasserauslässen versehen ist, wobei der Wasserauslass der beweglichen Keramikplatte (41) mit verschiedenen Wasserauslässen an der feststehenden Keramikplatte (42) durch Drehen des Dreh-Schaltelements (22) verbindbar ist und verschiedene Wasserauslässe zum Abgeben von Wasser ausgewählt werden können.

6. Schaltventileinsatz für die Wasserabsperrung nach Anspruch 5, bei welchem die bewegliche Keramikplatte (41) und die feststehende Keramikplatte (42) jeweils mit einem Wasserauslass versehen sind, wobei durch Drehen des Dreh-Schaltelements (22) ein Wasserauslassbereich, in dem die jeweiligen Wasserauslässe der beweglichen Keramikplatte (41) und der feststehenden Keramikplatte (42) miteinander übereinstimmen, geändert wird, sowie die aus dem Wasserauslass (12) ausgegebene Wassermenge geändert wird.

7. Schaltventileinsatz für die Wasserabsperrung nach Anspruch 1, bei welchem das Druck- Wasserabsperrelement (21) und das Dreh-Schaltelement (22) koaxial im Körper angeordnet sind, wobei das Druck-Wasserabsperrelement (21) im Dreh-Schaltelement (22) angeordnet ist, und die beiden Gruppen von Mechanismen völlig unabhängige Komponenten sind.

## Revendications

1. Pièce intérieure de valve de commutation pour l'arrêt d'eau, comprenant un corps de pièce intérieure de valve (1), le corps de pièce intérieure de valve (1) étant pourvu d'une entrée d'eau (11) et d'une sortie d'eau (12) ; l'entrée d'eau (11) et la sortie d'eau (12) étant reliées pour former un canal d'écoulement ; le corps de pièce intérieure de valve (1) étant pourvu d'une cavité de réception le long de sa direction axiale ; dans laquelle un intérieur de la cavité de réception est pourvu d'un élément d'actionnement (2), d'un élément d'arrêt d'eau (3) et d'un élément de commutation de sortie d'eau (4) ;
dans laquelle l'élément d'actionnement (2) comprend un élément d'arrêt d'eau sous pression (21) et un élément de commutation rotatif (22) qui sont prévus indépendamment l'un de l'autre ; l'élément d'arrêt d'eau sous pression (21) étant mobile le long d'une direction axiale de la cavité de réception, et l'extrémité de l'élément d'arrêt d'eau sous pression (21) venant en butée contre ou étant séparée d'un trou de surpression (31) de l'élément d'arrêt d'eau (3) ;
dans laquelle l'élément d'arrêt d'eau (3) est pourvu d'une cavité d'arrêt d'eau (32), dans laquelle est placé un siège de fixation (33) ; une feuille d'étanchéité (34) étant disposée sur le siège de fixation (33), et une partie d'étanchéité à l'eau (13) faisant face à la feuille d'étanchéité (34) étant disposée dans le canal d'écoulement ; dans laquelle le siège de fixation (33) et la feuille d'étanchéité (34) sont pourvus d'un trou traversant (35) communiquant avec l'entrée d'eau (11) et la cavité d'arrêt d'eau (32) au niveau de positions correspondantes ; dans laquelle le siège de fixation (33) est en outre pourvu du trou de surpression (31) reliant la sortie d'eau (12) et la cavité d'arrêt d'eau (32) ; dans laquelle, lorsque l'extrémité de l'élément d'arrêt d'eau sous pression (21) est scellée contre le trou de surpression (31), l'eau dans la cavité d'arrêt d'eau (32) presse vers le bas la feuille d'étanchéité (34) le long de la direction axiale pour sceller la partie d'étanchéité à l'eau (13) ; dans laquelle, lorsque l'extrémité de l'élément d'arrêt d'eau sous pression (21) est séparée du trou de surpression (31), l'eau sous la feuille d'étanchéité (34) pousse la feuille d'étanchéité (34) vers le haut le long de l'axe pour être séparée de la partie d'étanchéité à l'eau (13) ;
dans laquelle l'élément de commutation rotatif (22) et l'élément de commutation de sortie d'eau (4) sont prévus de manière articulée ;
dans laquelle l'élément de commutation de sortie d'eau (4) comprend une feuille céramique mobile (41) et une feuille céramique fixe (42) montées sur la sortie d'eau (12) ; la feuille céramique mobile (42) étant agencée conjointement avec l'élément de commutation rotatif (22) ;
**caractérisée en ce que**
l'élément d'arrêt d'eau sous pression (21) comprend un mécanisme de pression de stylo à bille (211) et une tige de pression (212) reliée à celui-ci, l'extrémité de la tige de pression (212) étant reliée à un cylindre de guidage (213) ; le cylindre de guidage (213) étant pourvu d'une cavité de drainage (214) reliée à la cavité d'arrêt d'eau (32), une extrémité du cylindre de guidage (214) étant manchonnée à l'extrémité de la tige de pression (212) et son autre extrémité étant manchonnée à l'extérieur d'une barre (215) ; l'extrémité de la barre (215) étant exposée à l'extérieur de la tige de pression (212) et reliée à un manchon d'étanchéité (216) ;
l'élément d'arrêt d'eau sous pression (21) et le siège de fixation (33) sont pourvus de parties de levage en butée l'une contre l'autre, dans laquelle, dans le processus de l'élément d'arrêt d'eau sous pression (21) se déplaçant vers le haut le long de l'axe, les parties de levage sont en butée l'une contre l'autre, de sorte que l'élément d'arrêt d'eau sous pression (21) entraîne le siège de fixation (33) pour se déplacer vers le haut ; et
dans laquelle les parties de levage comprennent un premier bloc de butée (218) disposé sur une circonférence extérieure du cylindre de guidage (213) et un second bloc de butée (331) disposé sur le siège de fixation (33), dans laquelle, lorsque le manchon d'étanchéité (216) scelle le trou de surpression (31) du siège de fixation (33), le second bloc de butée (331) est situé au-dessus du premier bloc de butée (218) et dans le même plan vertical.

2. Pièce intérieure de valve de commutation pour l'arrêt d'eau selon la revendication 1, dans laquelle l'entrée d'eau (11) est prévue sur le côté du corps de pièce intérieure de valve (1) et la sortie d'eau (12) est prévue au fond du corps de pièce intérieure de valve (1) ; la cavité d'arrêt d'eau (32) étant située au-dessus de l'entrée d'eau (11), et dans laquelle le siège de fixation (33) est placé au fond de la cavité d'arrêt d'eau (32).

3. Pièce intérieure de valve de commutation pour l'arrêt d'eau selon la revendication 1, dans laquelle un ressort de compensation (217) est prévu dans la cavité de drainage (214).

4. Pièce intérieure de valve de commutation pour l'arrêt d'eau selon la revendication 1, dans laquelle l'élément d'arrêt d'eau (3) est un couvercle de pression, dans laquelle un couvercle de fixation et le fond du couvercle de pression sont reliés de manière fixe et entourés pour former la cavité d'arrêt d'eau (32) ; le couvercle de pression étant également pourvu d'une cavité de guidage, qui est prévue au-dessus de la cavité d'arrêt d'eau (32) et reliée à celle-ci ; le cylindre de guidage (213) se déplaçant vers le haut et vers le bas le long de la cavité de guidage ; le haut de la cavité de guidage étant pourvu d'un bloc de limitation qui restreint le mouvement du cylindre de guidage (213).

5. Pièce intérieure de valve de commutation pour l'arrêt d'eau selon la revendication 1, dans laquelle la feuille céramique mobile (41) est pourvue d'une sortie d'eau et la feuille céramique fixe (42) est pourvue d'au moins deux sorties d'eau ; la sortie d'eau de la feuille céramique mobile (41) pouvant être reliée à différentes sorties d'eau sur la feuille céramique fixe (42) par la rotation de l'élément de commutation rotatif (4) et différentes sorties d'eau sont sélectionnées pour évacuer l'eau.

6. Pièce intérieure de valve de commutation pour l'arrêt d'eau selon la revendication 5, dans laquelle la feuille céramique mobile (41) et la feuille céramique fixe (42) sont pourvues d'une sortie d'eau respectivement ; dans laquelle, par la rotation de l'élément de commutation rotatif (22), une zone d'évacuation d'eau, dans laquelle les sorties d'eau respectives de la feuille céramique mobile (41) et de la feuille céramique fixe (42) coïncident l'une avec l'autre, est modifiée, et la quantité d'eau évacuée depuis la sortie d'eau (12) est modifiée.

7. Pièce intérieure de valve de commutation pour l'arrêt d'eau selon la revendication 1, dans laquelle l'élément d'arrêt d'eau sous pression (21) et l'élément de commutation rotatif (22) sont disposés coaxialement dans le corps, et l'élément d'arrêt d'eau sous pression (21) étant situé dans l'élément de commutation rotatif (22), et les deux groupes de mécanismes sont des composants complètement indépendants.
